(19) **Europäisches Patentamt European Patent Office Office européen des brevets**

(11) **EP 4 782 670 A1**

(12) **EUROPEAN PATENT APPLICATION**

(43) Date of publication:
29.07.2026 Bulletin 2026/31

(21) Application number: 26153919.1

(22) Date of filing: 23.01.2026

(51) International Patent Classification (IPC):
F02C 3/08 (2006.01)        F02C 6/08 (2006.01)
F02C 9/18 (2006.01)

(52) Cooperative Patent Classification (CPC):
F02C 6/08; F02C 3/08; F02C 9/18; F05D 2220/3219

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.01.2025 US 202519036890

(71) Applicant: **Pratt & Whitney Canada Corp.**
(01BE5) Longueuil, QC J4G 1A1 (CA)

(72) Inventors:
• **CHIANG, Christopher**
(01BE5) Longueuil, J4G 1A1 (CA)
• **DUONG, Hien**
(01BE5) Longueuil, J4G 1A1 (CA)

(74) Representative: **Dehns**
**10 Old Bailey**
**London EC4M 7NG (GB)**

(54) **COMPRESSOR BLEED SLOT DIFFUSER**

(57)    Gas turbine engines include an engine core defining an engine axis and having compressor section (300), combustor, and turbine sections arranged along the engine axis. A core flow path is defined through the sections of the engine core. A casing (302) of the compressor section (300) defines, in part, a portion of the core flow path, with a bleed air cavity (310) defined between the casing (302) of the compressor section (300) and an engine housing (312). An impeller (308) is arranged between the compressor (300) and combustor sections, the impeller (308) include an impeller shroud (316). A bleed aperture (314) is defined axially between the casing (302) and the impeller shroud (316) with a bleed flow extension (324) extending from the casing (302) and into the bleed air cavity (310) and a diffuser channel (322) is defined between a surface of the bleed flow extension (324) and a surface of the impeller shroud (316), with the diffuser channel (322) having an inlet area that is less than an outlet area.

FIG. 3A

EP 4 782 670 A1

## Description

BACKGROUND

Illustrative embodiments pertain to the art of gas turbine engines, and specifically to configurations and features of compressors of gas turbine engines.

Gas turbine engines are configured to combust fuel with air to generate a drive force for rotationally driving shafts and associated components to produce thrust for flight. Such engines typically include a fan, a compressor section, a combustor section, and a turbine section. Some engine configurations are designed with core flow and bypass flow paths, with a core flow directed through the compressor section for compression, combustion within the combustor section, and then expansion through the turbine section, prior to being exhausted from a nozzle of the engine. In some engine configurations, air may be extracted from compressor stages of the compressor section and supplied to other parts of the engine or to other aircraft systems for various purposes, such as cooling, lubrication, supplying air for humans on the aircraft, or the like. Such air that is extracted from the core flow of the engine may be referred to as bleed air. Bleed air may be used, for example, for temperature control, conditioning a fuel-air mixture in the combustor section, cooling of turbine section components of the engine, ice control for the wings, environmental control systems (e.g., for occupied parts of the aircraft, such as a cabin or cockpit) or the like.. In some aircraft or engine configurations, the bleed air may be extracted and distributed for multiple purposes.

Aircraft systems may therefore require at least a minimum flow rate of bleed air at a particular temperature and pressure. Existing bleed air systems typically have slots which divert bleed air at an angle perpendicular to the main gas path through the engine. Such bleed slots may result in losses, which may in turn undermine flow efficiency and reduce temperature and pressure of bleed air. Accordingly, improved bleed air systems may increase efficiency and operational conditions of engines and aircraft.

BRIEF DESCRIPTION

According to aspects, gas turbine engines are provided. The gas turbine engines include an engine core defining an engine axis and having a compressor section, a combustor section, and a turbine section arranged along the engine axis, with a core flow path defined through the compressor section, the combustor section, and the turbine section, a casing of the compressor section defining, in part, a portion of the core flow path, with a bleed air cavity defined between the casing of the compressor section and an engine housing, an impeller arranged between the compressor section and the combustor section, the impeller comprising an impeller shroud, a bleed aperture defined axially between the casing and the impeller shroud; and a bleed flow extension extending from the casing and into the bleed air cavity. A diffuser channel is defined between a surface of the bleed flow extension and a surface of the impeller shroud, wherein the diffuser channel has an inlet area that is less than an outlet area.

In addition to one or more of the features described above, or as an alternative, further examples of the gas turbine engines may include that the bleed flow extension comprises a linear portion that extends from the casing and into the bleed air cavity and a curved portion that extends from the linear portion into the bleed air cavity.

In addition to one or more of the features described above, or as an alternative, further examples of the gas turbine engines may include that the linear portion extends at a bleed angle relative to the casing.

In addition to one or more of the features described above, or as an alternative, further examples of the gas turbine engines may include that the bleed angle is equal to or greater than 30° and less than or equal to 60°.

In addition to one or more of the features described above, or as an alternative, further examples of the gas turbine engines may include a fillet at a location where the linear portion extends from the casing and defining a portion of an inlet to the diffuser channel.

In addition to one or more of the features described above, or as an alternative, further examples of the gas turbine engines may include that the linear portion has a length ($L_1$) defined relative to a distance ($R_1$) of the casing from the engine axis: $0.05R_1 \leq L_1 \leq 0.25R_1$.

In addition to one or more of the features described above, or as an alternative, further examples of the gas turbine engines may include that the curved portion has an arc length ($L_2$) and an arc radius ($R_2$) defined relative to a distance ($R_1$) of the casing from the engine axis: $0.25R_1 \leq L_2 \leq 0.50R_1$ and $0.05R_1 \leq R_2 \leq 0.40R_1$.

In addition to one or more of the features described above, or as an alternative, further examples of the gas turbine engines may include one or more supports structurally connecting the casing with the impeller shroud, wherein the bleed aperture is defined circumferentially between the one or more supports.

In addition to one or more of the features described above, or as an alternative, further examples of the gas turbine engines may include that the bleed flow extension comprises a linear portion extending from the casing and wherein the one or more supports extend between the impeller shroud and the linear portion of the bleed flow extension.

In addition to one or more of the features described above, or as an alternative, further examples of the gas turbine engines may include that the diffuser channel has an inlet area that is less than an outlet area of the diffuser channel.

In addition to one or more of the features described above, or as an alternative, further examples of the gas turbine engines may include that the inlet area is 4 times or less than that of the outlet area.

In addition to one or more of the features described above, or as an alternative, further examples of the gas turbine engines may include that a coefficient of pressure ($C_p$) along an upstream wall of the diffuser channel and a coefficient of pressure ($C_p$) along a downstream wall of the diffuser channel are each less than 0.6.

In addition to one or more of the features described above, or as an alternative, further examples of the gas turbine engines may include that the diffuser channel has a throat area ($T_a$) and a mean line ($L_m$), and the diffuser channel is defined as having the following relationship: $L_m/T_a \geq 6$

In addition to one or more of the features described above, or as an alternative, further examples of the gas turbine engines may include at least one stiffener element arranged within the diffuser channel and extending between a surface of the bleed flow extension and a surface of the impeller shroud.

In addition to one or more of the features described above, or as an alternative, further examples of the gas turbine engines may include that the at least one stiffener element is arranged radially relative to the engine axis.

In addition to one or more of the features described above, or as an alternative, further examples of the gas turbine engines may include that the at least one stiffener element is arranged with a circumferential angled orientation relative to the engine axis.

In addition to one or more of the features described above, or as an alternative, further examples of the gas turbine engines may include that the at least one stiffener has an airfoil configuration.

In addition to one or more of the features described above, or as an alternative, further examples of the gas turbine engines may include that the bleed air cavity is fluidly coupled to at least one of an engine system and an aircraft system and configured to supply bleed air to the respective system.

In addition to one or more of the features described above, or as an alternative, further examples of the gas turbine engines may include that the compressor section comprises at least one rotor element and at least one vane element.

In addition to one or more of the features described above, or as an alternative, further examples of the gas turbine engines may include that the at least one vane element is arranged axially aft of the at least one rotor element, and the bleed aperture is positioned axially aft of the at least one vane element.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

BRIEF DESCRIPTION OF THE DRAWINGS

The following descriptions should not be considered limiting in any way. With reference to the accompanying drawings, like elements are numbered alike: The subject matter is particularly pointed out and distinctly claimed at the conclusion of the specification. The foregoing and other features, and advantages of the present disclosure are apparent from the following detailed description taken in conjunction with the accompanying drawings in which like elements may be numbered alike and:

FIG. 1 is a schematic cross-sectional illustration of a gas turbine engine that may incorporate embodiments of the present disclosure;

FIG. 2 is a schematic illustration of a portion of a compressor section of a gas turbine engine that may incorporate embodiments of the present disclosure;

FIG. 3A is a schematic illustration of a portion of a compressor section of a gas turbine engine illustrating an embodiment of the present disclosure;

FIG. 3B is an enlarged illustration of a part of the compressor section shown in FIG. 3A;

FIG. 3C is another enlarged illustration of a part of the compressor section shown in FIG. 3A;

FIG. 4A is a schematic illustration of a compressor section of a gas turbine engine in accordance with another embodiment of the present disclosure;

FIG. 4B is an enlarged alternative view of the configuration shown in FIG. 4A;

FIG. 4C is another view of the configuration shown in FIG. 4A;

FIG. 5 is a schematic illustration of a compressor section of a gas turbine engine in accordance with another embodiment of the present disclosure; and

FIG. 6 is a schematic illustration of a compressor section of a gas turbine engine in accordance with another embodiment of the present disclosure.

DETAILED DESCRIPTION

Detailed descriptions of one or more embodiments of the disclosed apparatus and/or methods are presented herein by way of exemplification and not limitation with reference to the Figures.

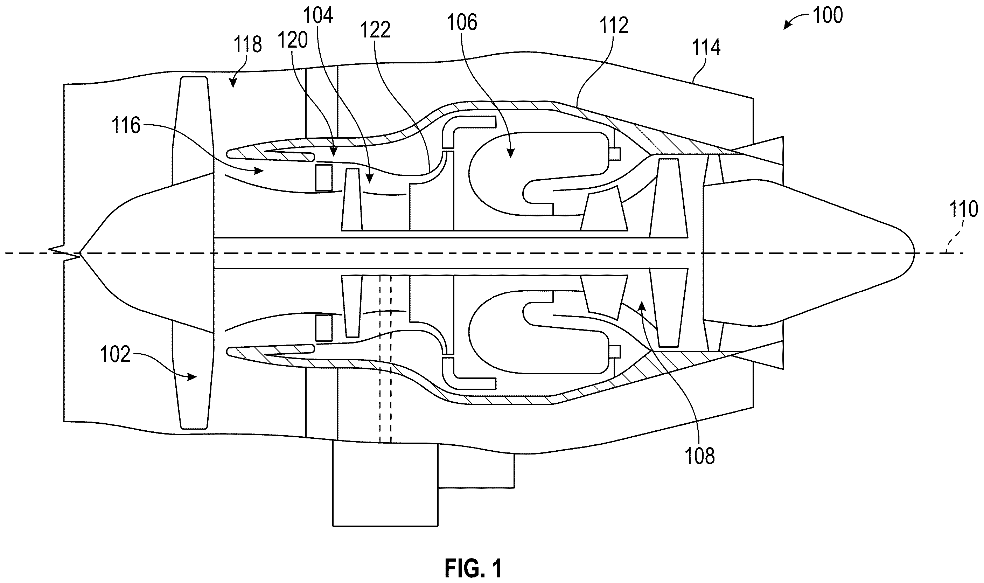

FIG. 1 is a schematic illustration of a gas turbine engine 100 that may incorporate embodiments of the present disclosure. The gas turbine engine 100 includes, arranged in serial flow communication, a fan section 102 through which ambient air is propelled, a compressor section 104 for pressurizing the air, a combustor section 106 in which the compressed air is mixed with fuel and ignited for generating an annular stream of hot combustion gases, and a turbine section 108 for extracting energy from the combustion gases. The sections 102, 104, 106, 108 may be axially arranged along an engine axis 110 and arranged within an engine housing 112 which in turn is arranged within an engine nacelle 114. The gas turbine engine 100 defines a core flow path 116 directed from the fan section 102 and into the engine housing 112 through the compressor section 104, the combustor section 106, and the turbine section 108. A bypass flow path 118 is defined between the engine housing 112 and the engine nacelle 114.

The gas turbine engine 100 may be mounted on an aircraft, such as on a wing, fuselage, tail, or the like. The gas turbine engine 100 is configured to generate and provide propulsion to the aircraft. In additional to generating thrust and propulsive force, the gas turbine engine 100 may be configured to implement additional functions. For example, the gas turbine engine 100 may be configured to generate and provide a supply of pressurized air, which may be referred to as bleed air, to other aircraft systems. The other aircraft systems may be parts of the gas turbine engine 100 or may be parts or systems of the aircraft. The bleed air may be drawn from the compressor section 104 and supplied to various systems through a bleed duct 120. The bleed air may be, for example, used for cooling parts of the combustor section 106 and/or the turbine section 108. In some arrangements, the bleed air may be employed as a heat source, for example, for cabin environmental controls, anti-icing systems or the like. It will be appreciated that the bleed air may be extracted and directed to various onboard systems for various heating, cooling, and/or pressurizing purposes. The bleed air may be extracted from the compressor section 104, and more particularly, may be extracted from an impeller 122 of the compressor section 104.

For example, a common air source for secondary air systems or an environmental control system of the aircraft is to use bleed flow from the impeller 122. The flow is extracted from a main gas path or the core flow path 116, through openings in a shroud casing of the impeller 112 and dumped into a cavity or the bleed duct 120. Typically, the extraction points or openings may be arranged as a series of bleed holes formed in the shroud casing, a series of bleed slots with recessed bridges, or a continuous circumferential opening. Although these geometries have provided sufficient bleed flow and pressure for the downstream purposes, losses occur. Accordingly, improved systems for controlling the pressure and/or for efficiently recovering the pressure of the bleed flow once the bleed air enters the cavity can improve overall engine efficiencies.

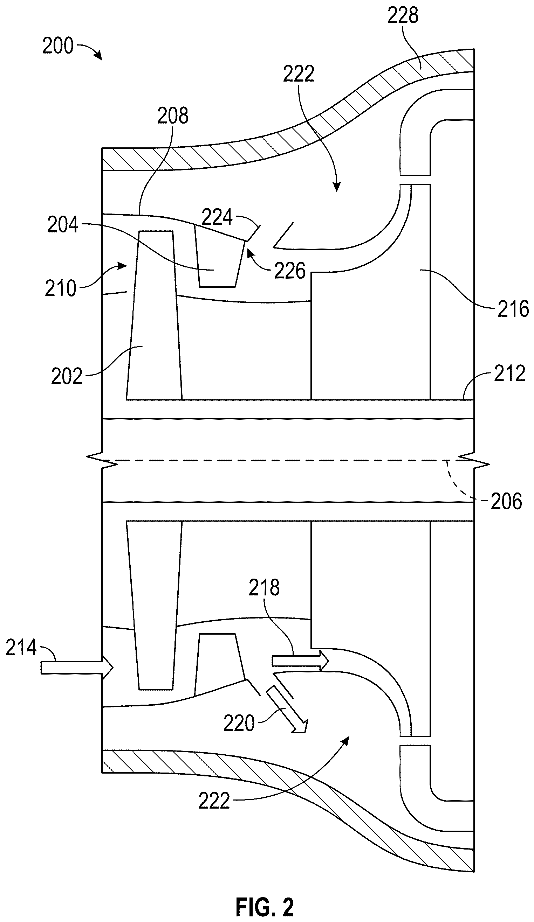

Referring now to FIG. 2, a schematic illustration of a portion of a compressor section 200 of a gas turbine engine that may incorporate embodiments of the present disclosure is shown. The compressor section 200 includes one or more rotor(s) 202 and stator(s) 204 which are axially arranged along or relative to an engine axis 206. In the illustrative portion shown in FIG. 2, a single rotor 202 and a single downstream stator 204 is illustrated. However, it will be appreciated that multiple rotors and stators may be arranged serially along the compressor section 200 (i.e., multiple stages). The rotor 202 and the stator 204 are arranged within a casing 208, which defines a section of a core flow path 210. Each rotor 202 is mounted for rotation on an engine shaft 212 and each stator 204 is stationary. A core flow air 214 may be provided from an upstream section of the compressor section 200 or from a fan section, as described above. The core flow air 214 is compressed as it passes through the rotors 202 and stators 204 of the compressor section 200.

Each rotor 202 and each stator 204 is configured with a plurality of airfoil members (e.g., rotor blades and stator vanes) spaced around a circumference of the respective structure and extending into the core flow path 210. The rotor blades of the rotors 202 may be attached, affixed, or otherwise mounted on rotor disks or may be integrally formed with a respective rotor disk (e.g., integrally bladed rotor). The stator vanes may be arranged as stator assemblies that are mounted to the casing 208. The stator vanes of the stator 204 and the rotor blades of the rotors 202 are configured so that rotation of the rotors 202 draws the core flow air 214 from an upstream location (e.g., a fan section) and forces the core flow air 214 along the core flow path 210 (e.g., an annular passage). Rotation of rotor(s) 202 will accelerate the core flow air 214 and increases the dynamic pressure and temperature thereof.

Downstream from the rotor(s) 202 and stator(s) 204 is an impeller 216. The impeller 216 is configured to receive and further compress, turn, and accelerate a combustor portion 218 of the core flow air 214 which is directed into a combustor section for combustion with fuel, as will be appreciated by those of skill in the art. As noted above, a portion of the core flow air 214 may be extracted as bleed air 220 into a bleed air cavity 222 (e.g., part of or fluidly connected to a bleed duct). The bleed air 220 is extracted or bled from the core flow air 214 in the core flow path 210 through one or more bleed apertures 224 and dumped into the bleed air cavity 222. As the bleed air 220 passes into the bleed air cavity 222, the bleed air 220 is decelerated and kinetic energy is recovered as static pressure. The bleed apertures 224 may be spaced circumferentially around the casing 208 and are located, at least in part, immediately upstream from an inlet or upstream end of the impeller 216. As such, the bleed air 220 may be extracted at a location downstream of the last set or stage of vanes of the stator(s) 204. It will be appreciated that bleed apertures 224 may be located at various other locations where bleed may be required, including, but not limited to, completely or partially between stator vanes rotor blades or at a location on the impeller 216.

The bleed apertures 224 are sized to admit a desired quantity of bleed air 220 (e.g. a desired mass flow rate) into the bleed air cavity 222. The desired quantity may depend on pressure requirements of various engine and/or aircraft systems to which the bleed air is supplied. The desired mass flow rate may be, for example, measured as a percentage of a total flow through the core flow path 210. For example, and without limitation, the bleed apertures 224 may be sized to admit between 5%-15% of the mass flow at the inlet of the core flow path 210, although other values are also possible without departing from the scope of the present disclosure.

The arrangement, angle, and orientation of the bleed apertures 224 may cause a portion of the bleed air 220 to be turned to a radial direction relative to the engine axis 206 (i.e., substantially perpendicular to the flow direction of the core flow air 214). As the bleed air 220 is extracted and flows from the core flow path 210 into the bleed air cavity 222 through the bleed apertures 224, the bleed air 220 is redirected to a direction aligned with the bleed apertures 224, i.e. perpendicularly to the wall of the casing 208. Such diversion of air may cause losses due, for example, to friction, turbulence, and flow separation. Accordingly, some energy is lost, rather than being recovered as static pressure. Furthermore, diversion of the bleed air 220 into the bleed apertures 224 may also cause disturbances within the core flow path 210.

The amount of energy lost and the amount of flow disturbance caused as the bleed air 220 flows into and through the bleed apertures 224 may depend on factors, including but not limited to, the degree of the angle between a flow direction of the core flow air 214 in the core flow path 210 and the orientation of the bleed apertures 224, the pressure of the core flow air 214 within the core flow path 210, and the volume of the bleed air 220 flowing through the bleed apertures 224. In a configuration with the bleed apertures having a substantially perpendicular orientation (i.e., radial), the angle between the bleed apertures and the average flow direction of the core flow air 214 is relatively large. Accordingly, losses due to diversion of the bleed air through the bleed apertures 224 may be significant. However, and as shown in FIG. 2, the bleed apertures 224 may define angled inlets 226 with an axial component to bleed or extract the bleed flow 220 from the core flow path 210 in a more parallel flow orientation than a perpendicular bleed aperture. As depicted, the angled inlets 226 are positioned at regions of high pressure in the core flow path 210, and are arranged proximate a trailing edge of the vanes of the stator 204 and upstream of the impeller 216. However, even with such angled bleed apertures 224, losses will occur. As illustrated, the bleed air cavity 222 is defined between an outer diameter surface of the casing 208 and an inner diameter surface of an engine housing 228. The bleed air 220 may be distributed from the bleed air cavity 222 to various other locations on the engine or the aircraft, as will be appreciated by those of skill in the art.

In view of the above and other considerations, embodiments of the present disclosure are directed to improved bleed flow mechanisms and systems. In accordance with some embodiments of the present disclosure, the bleed flow extraction systems may maximize the recovery of static pressure of air within the bleed air cavity extracted from the high pressure compressor through or along a bleed flow extension arranged relative to the inlet of the bleed aperture. The geometry of the bleed flow extension allows for the bleed flow to diffuse more efficiently as it is extracted from the core flow path and dumped into the bleed air cavity, thus reducing pressure losses. The bleed flow extension(s) may extend from the bleed apertures to create a diffuser channel between the bleed flow extension and a surface of an impeller shroud. As such, rather than dumping the bleed flow into an open cavity, which induces pressure loss, the shape of the bleed flow extensions will guide the flow along a well-defined diffusive path to steadily increase the pressure.

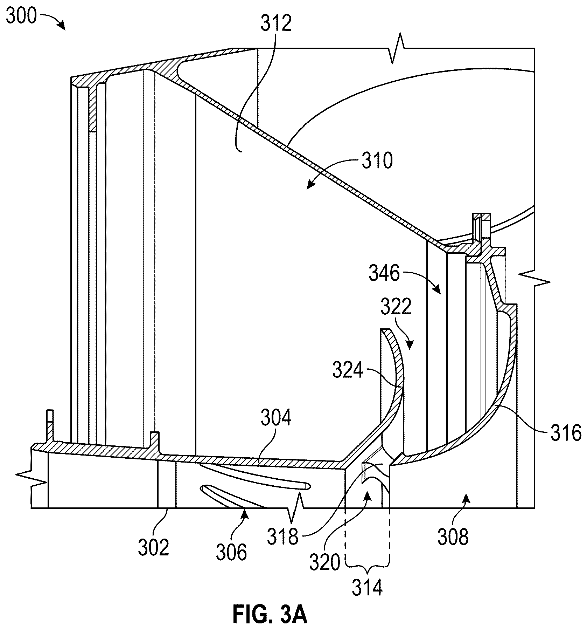

Referring now to FIGS. 3A-3C, schematic illustrations of a portion of a compressor section 300 in accordance with an embodiment of the present disclosure are shown. The compressor section 300 may be configured as part of a gas turbine engine, such as shown and described above. The compressor section 300 includes a casing 302 that defines a wall or part of a flow passage or core flow path for a core flow (e.g., core flow air 214 shown in FIG. 2). The casing 302 is formed, in part, from a stator 304 which includes, in this illustration, vane mounting holes 306 (i.e., the vanes are not shown). The stator 304 is a stationary component that is arranged upstream from an impeller 308, similar to the configuration shown in FIG. 2. Radially outward from the casing 302, and partially defined by a surface of the casing 302, is a bleed air cavity 310. The bleed air cavity 310 is defined, at least in part, between an outer diameter surface of the casing 302 and an inner diameter surface of an engine housing 312 (or other structure that defines the bleed air cavity 310). Bleed air may be extracted from the core flow path at a bleed aperture 314 which is defined by one or more openings or spaces between the casing 302 and an impeller shroud 316 of the impeller 308.

The bleed aperture 314 may be defined as a circumferential slot that is substantially continuous or discontinuously about a circumference of the compressor section 300. For example, the bleed aperture 314 may be a substantially continuous slot with a set of supports 318 structurally connecting the casing 302 with the impeller shroud 316 to thereby form a substantially uniform and continuous surface or wall that defines a part of the core flow path. As discussed above, bleed air may be extracted from the core flow through the bleed aperture 314. In this configuration, the bleed aperture 314 is defined by an inlet 320 that opens into a diffuser channel 322 prior to flowing into the bleed air cavity 310. The diffuser channel 322 is defined between a surface of the impeller shroud 316 and a bleed flow extension 324 that extends from the casing 302 and into the bleed air cavity 310. The casing 302 has a radial position (or distance) 326 ($R_1$) from an engine axis 328, with the engine axis 328 shown schematically, and not to scale.

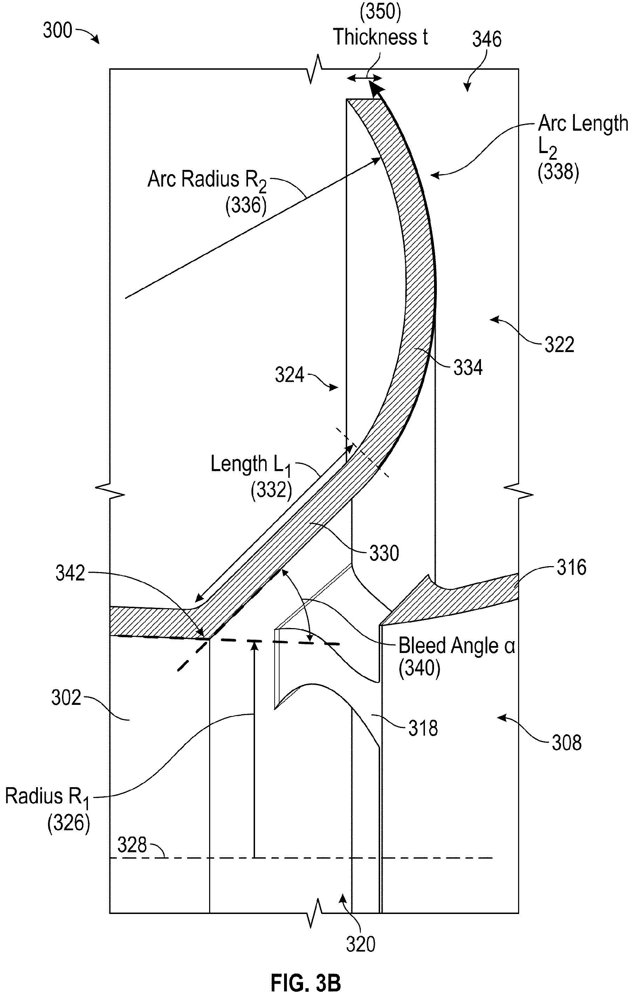

Referring to FIGS. 3B-3C. enlarged and detailed illustrations of parts of the compressor section 300 and, more particularly, of the diffuser channel 322 and aspects thereof are shown. As shown, the bleed flow extension 324 is a structure that extends from the casing 302 and defines the diffuser channel 322 between the bleed flow extension 324 and the impeller shroud 316. The bleed flow extension 324 includes a linear portion 330 having a linear length 332 ($L_1$) and a curved portion 334 having an arc radius 336 ($R_2$) and an arc length 338 ($L_2$). The curved portion 334 extends from the linear portion 330 of the bleed flow extension 324 and into the bleed air cavity 310. The linear portion 330 is angled relative to the casing 302 (and an axial direction) by a bleed angle 340 ($\alpha$). At the inlet 320, the linear portion 330 may include a chamfer or fillet 342 at an upstream edge of the inlet 320 (i.e., at the transition from the casing 302 to the bleed flow extension 324). In accordance with some embodiments, the fillet 342 may have a profile selected to avoid shar edge flow separation, and may have a profile that is no greater than $0.05R_1$. Additionally, as shown, the supports 318 may be arranged and connect between the impeller shroud 316 and the linear portion 330, to provide support thereto. At the inlet 320, the diffuser channel 322 has an inlet area 344 and an outlet 346 of the diffuser channel 322 defines an outlet area 348. The bleed flow extension 324 may have a material thickness 350 ($t$) that is selected to minimize weight and material while ensuring sufficient structural strength to reduce or eliminate unwanted vibrations and/or breakage during use.

In accordance with some embodiments of the present disclosure, the pressure of the extracted air (e.g., bleed air) within the bleed air cavity 310 may be maximized by using the bleed flow extension 324 to create and define the diffuser channel 322 with the impeller shroud 316. Rather than dumping the bleed flow into a substantially open cavity, which induces pressure loss, the shape of the bleed flow extension 324 is arranged to guide the bleed flow with a well-defined diffusive path to steadily increase the pressure thereof.

In accordance with some embodiments, and without limitation, the features of the bleed flow extension 324 may be arranged to achieve the increased pressure while minimizing weight and impact to engine efficiencies. For example, and without limitation, the bleed flow extension 324 may be configured having a bleed angle 340 ($\alpha$) of between 30° and 60° (i.e., $30° \leq \alpha \leq 60°$) relative to the engine axis 328 or main gas path flow direction at the axial position of the upstream side bleed flow extension 324 at the inlet 320 of the diffuser channel 322. It will be appreciated that a downstream side of the inlet 320 of the diffuser channel 322 may also be shaped to have an angle or shape equal to the bleed angle 340 ($\alpha$), such that the inlet 320 has a generally confirming inlet scoop shape to extract the bleed air flow from the main flow path.

The linear length 332 ($L_1$) of the linear portion 330 may be based, in part, upon the radial distance 326 ($R_1$) from the engine axis 328. For example, in accordance with a non-limiting embodiment, the linear length 332 ($L_1$) may be between 5% and 25% of the radial distance 326 ($R_1$) (i.e., $0.05R_1 \leq L_1 \leq 0.25R_1$). The curved portion 334 extends from the linear portion 330 and may be defined having an arc radius 336 ($R_2$) and an arc length 338 ($L_2$), with each characteristic being defined, for example and without limitation, based on the radial distance 326 ($R_1$) from the engine axis 328 (e.g., $0.25R_1 \leq L_2 \leq 0.50R_1$; $0.05R_1 \leq R_2 \leq 0.40R_1$). In accordance with some embodiments, the material thickness 350 ($t$) of the bleed flow extension 324 may be equal to a material thickness of the casing 302. In some embodiments, the material thickness 350 ($t$) may be based defined as: $t \leq 0.15R_1$.

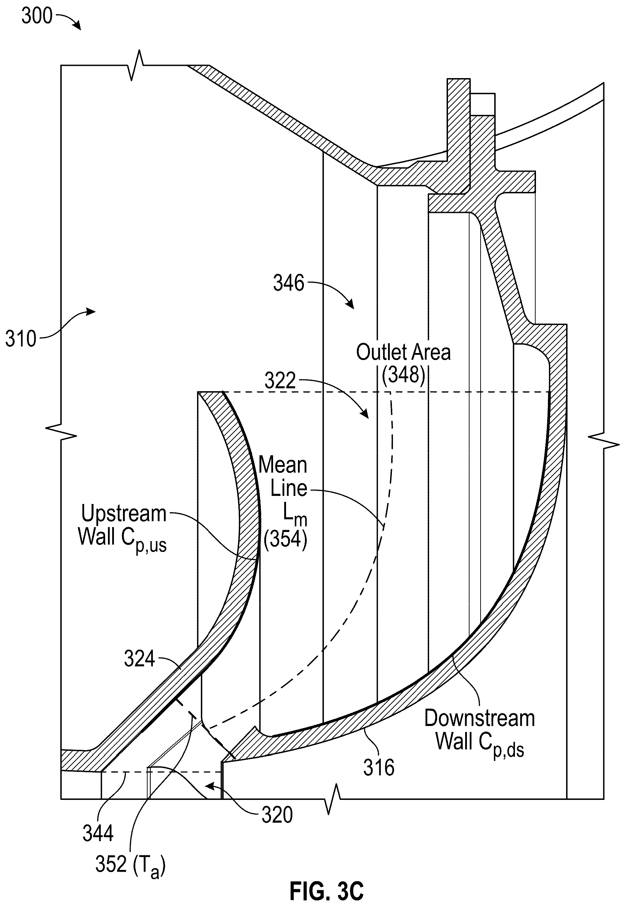

Additional properties of the diffuser channel 322 may include, in some embodiments and without limitation, a relationship between the inlet area 344 and the outlet area 348. For example, a circumferential outlet-to-inlet area ratio may be less than 4. In some embodiments, the diffuser channel 322 may be defined relative to a throat area 352 ($T_a$) and a mean line 354 ($L_m$), shown in FIG. 3C. The throat area 352 ($T_a$) is defined as the narrowest normal line or distance between an inner surface of the impeller shroud 316 (downstream wall) at the inlet 320 and an inner surface of the bleed flow extension 324 (upstream wall). The mean line 354 ($L_m$) is defined as a center line extending as a line that is equidistant to each of the downstream wall and the upstream wall in a flow direction from the inlet 320 to the outlet 346. In some embodiments, the diffuser channel 322 may be configured or assembled with the following relationship:

$$L_m/T_a \geq 6 \,.$$

In accordance with some embodiments, a coefficient of pressure ($C_p$) along the upstream and downstream walls is less than 0.6. The coefficient of pressure ($C_p$) is measured along a surface of the respective wall. For example, an upstream coefficient of pressure ($C_{p,us}$) is measured along a surface of the bleed flow extension 324 that defines a forward or upstream surface of the diffuser channel 322. Similarly, a downstream coefficient of pressure ($C_{p,ds}$) is measured along a surface of the impeller shroud 316 of the impeller 308 that defines an aft or downstream surface of the diffuser channel 322, as illustrated in FIG. 3C. Although specific example relationships, values, and characteristics are described herein, those of skill in the art will appreciate that the lengths, thicknesses, angles, and other dimensions may be selected outside of the disclosed values/ranges, without departing from the scope of the present disclosure, and the provided examples are merely for explanatory purposes and are not intended to be limiting.

As noted above, the thickness 350 (t), may be selected to ensure structural integrity of the bleed flow extension 324. In some embodiments, it may be beneficial to have a relatively thin thickness 350 (*t*) and/or it may be beneficial to provide structural support to the bleed flow extension 324.

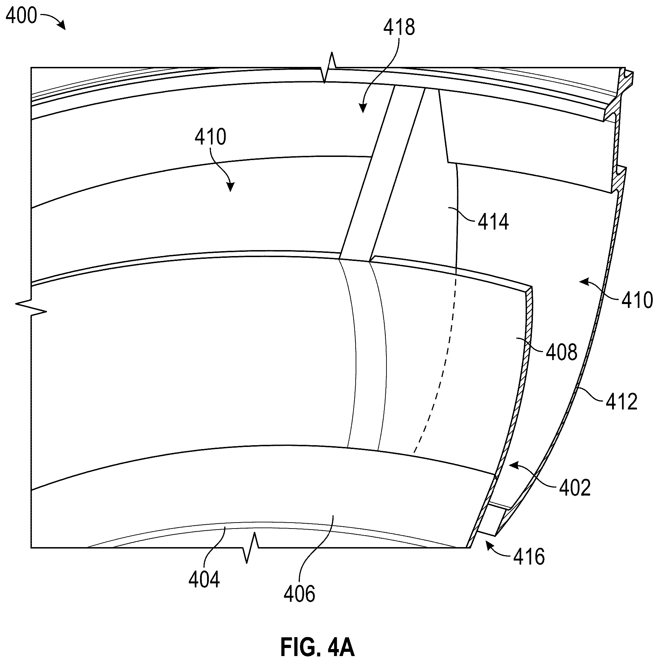

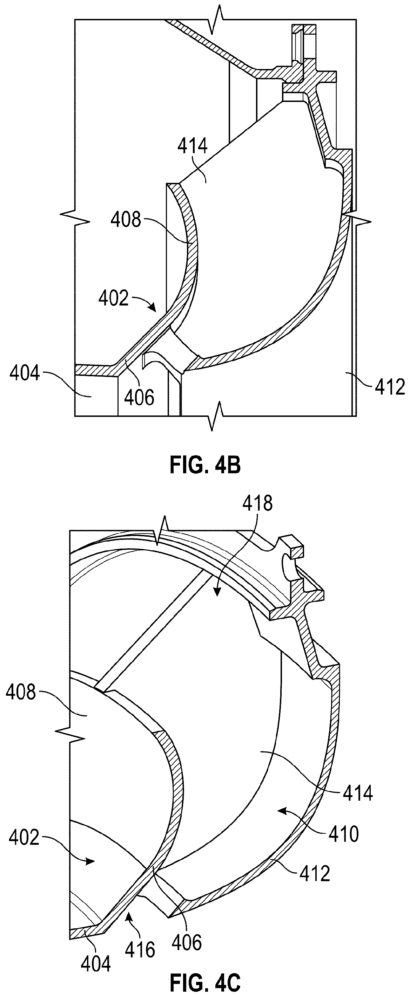

For example, referring now to FIGS. 4A-4C, schematic illustrations of a portion of a compressor section 400 in accordance with an embodiment of the present disclosure are shown. The compressor section 400 may be similar to that shown and described above. The compressor section 400 includes a bleed flow extension 402 that extends radially outward from a casing 404 that defines a portion of a main flow path through the compressor section 400. The bleed flow extension 402 includes a linear portion 406 and a curved portion 408, similar to that shown and described above. A diffuser channel 410 is defined between the bleed flow extension 402, which defines an upstream wall of the diffuser channel 410, and an impeller shroud 412, which defines a downstream wall of the diffuser channel 410.

In this illustrative configuration, the bleed flow extension 402 is arranged with one or more stiffener elements 414. The stiffener elements 414 may be arranged a sheets of material or ribs that extend along a flow length of the diffuser channel 410, from an inlet 416 of the diffuser channel 410 to an outlet 418 thereof. The stiffener elements 414 may be arranged substantially radially, and may define one or more separated sections of the diffuser channel 410. The stiffener elements 414 can provide structural support and rigidity to the bleed flow extension 402. The support provided by the stiffener elements 414 may increase the structural integrity of the bleed flow extension 402, improve fatigue resistance thereof, and may be reduce or eliminate noise due to induced vibration during operation. The stiffener elements 414 may also convert kinetic energy from a high velocity flow received from upstream compressor rotors (e.g., high velocity, rotational bleed flow) into static pressure, such as by blocking and reducing the rotational component of the bleed flow as it enters and travels through the diffuser channel 410.

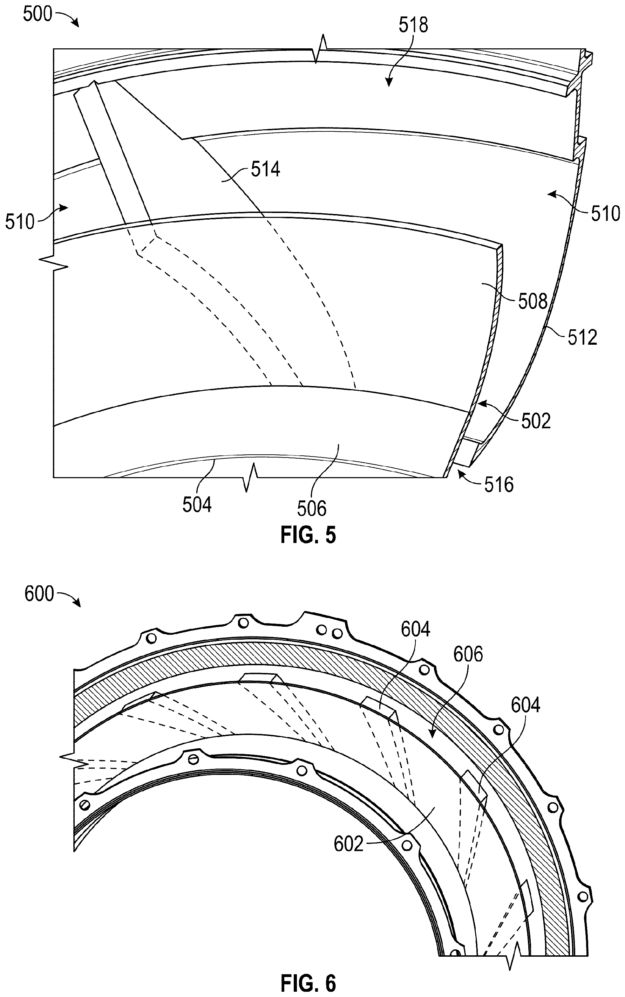

Referring now to FIG. 5, a schematic illustration of a portion of a compressor section 500 in accordance with an embodiment of the present disclosure is shown. The compressor section 500 may be similar to that shown and described above, having a bleed flow extension 502 that extends radially outward from a casing 504 that defines a portion of a main flow path through the compressor section 500. The bleed flow extension 502 includes a linear portion 506 and a curved portion 508, similar to that shown and described above. A diffuser channel 510 is defined between the bleed flow extension 502, which defines an upstream wall of the diffuser channel 510, and an impeller shroud 512, which defines a downstream wall of the diffuser channel 510. In this configuration, one or more stiffener elements 514 are provided similar to that shown and described with respect to FIGS. 4A-4C. In this configuration, the stiffener elements 514 are arranged with an angle (circumferential) relative to an axial flow direction through the compressor section 500. The orientation of the stiffener elements 514 may be aligned with a turning flow direction induced by an upstream compressor rotor component and/or turning induced by compressors vanes arranged upstream of the bleed flow extension 502. In accordance with some embodiments, an angle (e.g., tangential or circumferential) relative to a radial direction may be between 0° and ±45° from the radial line.

Further still, the stiffener elements may be arranged as airfoil-type structures. For example, as shown in FIG. 6, a compressor section 600 having a bleed flow extension 602 may be supported by one or more stiffener elements 604. The stiffener elements 604 may have a circumferential dimension (width) such that the width at an inlet end of a diffuser channel 606 is less than a width of the stiffener elements 604 at an outlet end of the diffuser channel 606. Such airfoil or vane-like structures can provide increased control of the diffusing of the flow of the bleed air such that losses are minimized and a relatively high pressure is maintained within a bleed air cavity.

As noted, the stiffener elements may be used to provide stiffness or support to the bleed flow extensions. Further, as noted, the stiffener elements may aid in controlling the pressure losses of the flow as the bleed flow is directed into the bleed flow cavity. In some configurations, the stiffener elements may be arranged to deswirl the flow as it passes from the main flow path and into the bleed flow cavity.

Advantageously, embodiments of the present disclosure provide for improved bleed flow extraction systems. In accordance with some embodiments of the present disclosure, gas turbine engine compressor sections are provided with bleed flow apertures having improved systems for maintaining or increasing a pressure of the extracted bleed air, as it is dumped into a bleed air cavity. In accordance with some embodiments, a bleed flow extension is provided at a bleed flow aperture to guide and diffuser the flow of bleed air as it is extracted from a main flow path and dumped into the bleed air cavity. The bleed flow extensions may be arranged to define a diffuser channel between a surface of the bleed flow extension and a surface of an impeller (impeller shroud) that is arranged downstream or aft of the bleed flow extension. Advantageously, embodiments of the present disclosure may maximize recovery of static pressure of bleed air within a bleed cavity extracted from a high pressure compressor through a bleed slot extension. The geometry of the bleed flow extension may allow for the bleed flow to diffuse more efficiently, thus reducing its pressure loss.

In accordance with some embodiments, stiffener elements may be provided to support the bleed flow extensions. In some such embodiments, the stiffener elements may also work to aid in the diffusion and recovery of static pressure. For example, the stiffener elements may be arranged to separate the diffuser channel into multiple separate channels that are defined, circumferentially, by the stiffeners. In some embodiments, the stiffener elements may be arranged in a radial orientation, relative to an engine axis. In some embodiments, the stiffener elements may be angled relative to the radial orientation, thus having a tangential or circumferential orientation (e.g., angled relative to a flow direction). Furthermore, in some embodiments, the stiffener elements may be arranged with an airfoil geometry, with two sides having different radii of curvature, which may aid in controlling the bleed flow as it is diffused through the diffuser channel.

As used herein, the term "about" and "substantially" are intended to include the degree of error associated with measurement of the particular quantity based upon the equipment available at the time of filing the application. For example, these terms may include a range of $\pm$ 8%, or 5%, or 2% of a given value or other percentage change as will be appreciated by those of skill in the art for the particular measurement and/or dimensions referred to herein. Further, the terms "about" and "substantially", when associated with non-numerical limits, are intended to include degrees of errors and/or minor variations as would be apparent to those of skill in the art when considering such concepts (e.g., shapes, relative arrangements, etc.).

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

While the present disclosure has been described with reference to an illustrative embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A gas turbine engine (100) comprising:

   an engine core defining an engine axis (110; 206; 328) and having a compressor section (104; 200; 300; 400; 500; 600), a combustor section (106), and a turbine section (108) arranged along the engine axis (110; 206; 328), with a core flow path (116; 210) defined through the compressor section (104...600), the combustor section (106), and the turbine section (108);
   a casing (208; 302; 404; 504) of the compressor section (104...600) defining, in part, a portion of the core flow path (116; 210), with a bleed air cavity (222; 310) defined between the casing (208...504) of the compressor section (104...600) and an engine housing (228; 312);
   an impeller (122; 216; 308) arranged between the compressor section (104...600) and the combustor section (106), the impeller (122; 216; 308) comprising an impeller shroud (316; 412; 512);
   a bleed aperture (224; 314) defined axially between the casing (208...504) and the impeller shroud (316; 412; 512); and
   a bleed flow extension (324; 402; 502; 602) extending from the casing (208...504) and into the bleed air cavity (222; 310),
   wherein a diffuser channel (322; 410; 510; 606) is defined between a surface of the bleed flow extension (324...602) and a surface of the impeller shroud (316; 412; 512), wherein the diffuser channel (322...602) has an inlet area (344) that is less than an outlet area (348).

2. The gas turbine engine of claim 1, wherein the bleed flow extension (324...602) comprises a linear portion (330; 506) that extends from the casing (208...504) and into the bleed air cavity (222; 310) and a curved portion (334; 508) that extends from the linear portion (330; 506) into the bleed air cavity (222; 310).

3. The gas turbine engine of claim 2, wherein the linear portion (330; 506) extends at a bleed angle (340) relative to the casing (208...504).

4. The gas turbine engine of claim 3, wherein the bleed angle (340) is equal to or greater than 30° and less than or equal to 60°.

5. The gas turbine engine of any of claims 2 to 4, further comprising a fillet (342) at a location where the linear portion (330; 506) extends from the casing (208...504) and defining a portion of an inlet (320; 416) to the diffuser channel (322...602).

6. The gas turbine engine of any of claims 2 to 5, wherein the linear portion (330; 506) has a length ($L_1$) (332) defined relative to a distance ($R_1$) (326) of the casing (208...504) from the engine axis (110; 206; 308): $0.05R_1 \leq L_1 \leq 0.25R_1$.

7. The gas turbine engine of any of claims 2 to 6, wherein the curved portion has an arc length ($L_2$) (338) and an arc radius ($R_2$) (336) defined relative to a distance ($R_1$) of the casing (208...504) from the engine axis (110; 206; 308): $0.25R_1 \leq L_2 \leq 0.50R_1$ and $0.05R_1 \leq R_2 \leq 0.40R_1$.

8. The gas turbine engine of any preceding claim, further comprising one or more supports (318) structurally connecting the casing (302) with the impeller shroud (316), wherein the bleed aperture (224; 314) is defined circumferentially between the one or more supports (318),
optionally wherein the bleed flow extension (324...602) comprises a or the linear portion (330; 506) extending from the casing (208...504) and wherein the one or more supports (318) extend between the impeller shroud (316; 412; 512) and the linear portion (330; 506) of the bleed flow extension (324...602).

9. The gas turbine engine of any preceding claim, wherein the diffuser channel (322...606) has an inlet area (344) that is less than an outlet area (348) of the diffuser channel (322...606), optionally wherein the inlet area (344) is 4 times or less than that of the outlet area (348).

10. The gas turbine engine of any preceding claim, wherein a coefficient of pressure ($C_p$) along an upstream wall of the diffuser channel (322...606) and a coefficient of pressure ($C_p$) along a downstream wall of the diffuser channel (322...606) are each less than 0.6.

11. The gas turbine engine of any preceding claim, wherein the diffuser channel (322...606) has a throat area ($T_a$) (352) and a mean line ($L_m$) (354), and the diffuser channel (322...606) is defined as having the following relationship: $L_m/T_a \geq 6$.

12. The gas turbine engine of any preceding claim, further comprising at least one stiffener element (414; 514; 604) arranged within the diffuser channel (322...606) and extending between a surface of the bleed flow extension (324...602) and a surface of the impeller shroud (316...512), optionally wherein the at least one stiffener element (414; 514; 604) has an airfoil configuration.

13. The gas turbine engine of claim 12, wherein the at least one stiffener element (414; 514; 604) is arranged radially relative to the engine axis (110; 206; 328) or with a circumferential angled orientation relative to the engine axis (110; 206; 328).

14. The gas turbine engine of any preceding claim, wherein the bleed air cavity (222; 310) is fluidly coupled to at least one of an engine system and an aircraft system and configured to supply bleed air (220) to the respective system.

15. The gas turbine engine of any preceding claim, wherein the compressor section (104...600) comprises at least one rotor element (202) and at least one vane element (204; 304), optionally wherein the at least one vane element (204; 304) is arranged axially aft of the at least one rotor element (202), and the bleed aperture (224; 314) is positioned axially aft of the at least one vane element (204; 304).

FIG. 1

**FIG. 2**

FIG. 3A

FIG. 3B

300

346

310

Outlet Area
(348)

322

Mean
Line
$L_m$
(354)

Upstream
Wall $C_{p,us}$

324

Downstream
Wall $C_{p,ds}$

316

320

344

352 ($T_a$)

FIG. 3C

400

418

410

414

410

408

412

402

416

404

406

**FIG. 4A**

414

408

402

404

406

412

**FIG. 4B**

418

408

402

414

410

412

404

416

406

**FIG. 4C**

FIG. 5

FIG. 6

EP 4 782 670 A1

EUROPEAN SEARCH REPORT

**Application Number**

EP 26 15 3919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/122939 A1 (REYNOLDS BRUCE DAVID [US] ET AL) 20 April 2023 (2023-04-20) * paragraph [0016] - paragraph [0027]; figures 1-2 * | 1-15 | INV. F02C3/08 F02C6/08 F02C9/18 |
| X | US 10 907 503 B2 (HONEYWELL INT INC [US]) 2 February 2021 (2021-02-02) * column 3, line 53 - column 8, line 29; figures 1-2 * | 1-15 | |
| A | US 2019/226488 A1 (TAWFIK JONATHAN ATEF [US] ET AL) 25 July 2019 (2019-07-25) * paragraph [0035]; figures 1-2 * | 1-15 | |
| A | US 2018/313364 A1 (MOECKEL CURTIS WILLIAM [US] ET AL) 1 November 2018 (2018-11-01) * paragraph [0045] - paragraph [0055]; figure 5 * | 1-15 | |

**TECHNICAL FIELDS SEARCHED (IPC)**

F02C

The present search report has been drawn up for all claims

| Place of search | Date of completion of the search | Examiner |
|---|---|---|
| The Hague | 28 May 2026 | Robelin, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 3919

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | | | Publication date | Patent family member(s) | | Publication date |
|---|---|---|---|---|---|---|
| US 2023122939 | A1 | | 20-04-2023 | EP 4166770 A1 | | 19-04-2023 |
| | | | | US 2023122939 A1 | | 20-04-2023 |
| US 10907503 | B2 | | 02-02-2021 | EP 2559858 A2 | | 20-02-2013 |
| | | | | US 2013017066 A1 | | 17-01-2013 |
| | | | | US 2018347401 A1 | | 06-12-2018 |
| US 2019226488 | A1 | | 25-07-2019 | NONE | | |
| US 2018313364 | A1 | | 01-11-2018 | CN 108799202 A | | 13-11-2018 |
| | | | | US 2018313364 A1 | | 01-11-2018 |

EPO FORM P0459

For more details about this annex : see Official Journal of the European Patent Office, No. 12/82